# EUROPEAN PATENT APPLICATION

(11) **EP 3 751 210 A1**
(43) Date of publication of application: **16.12.2020**
(21) Application number: 19180045.7
(22) Date of filing: 13.06.2019
(51) Int. Cl.: F24F 11/38, F24F 11/39, F24F 11/52, F24F 11/77

(54) **CLIMATE CONTROL SYSTEM WITH A WEAR PART**

(71) Applicant: Siemens Schweiz AG, 8047 Zürich (CH)
(72) Inventor: VAL, Emmanuel, 8942 Oberrieden (CH)
(74) Representative: Maier, Daniel Oliver

(57) **Abstract**

The invention relates to a climate control system 1, which includes equipment for treating the air in a building, an airplane, a ship or the like, typically by heating, cooling, ventilating, drying or humidifying. The climate control system 1 comprises a wear part 10, 11, for example an air filter, the belt of a heat exchanger wheel or an air damper. It also comprises an actuator 6, 7 that operates the wear part 10, 11 and a sensor 12, 13 that senses the effect thereof and produces a sensed value 25. Furthermore, it comprises a controller 20 that can cause an operation of the actuator 6, 7 on the basis of the sensed value 25 at least. The controller 20 occasionally performs an inherent suitability test of the wear part 10, 11.

## Description

The invention relates to a climate control system that comprises at least one wear part.

A climate control system includes equipment for treating the air in a building, an airplane, a ship or the like, typically by heating, cooling, ventilating, drying or humidifying. The wear part for example is an air filter, the belt of a heat exchanger wheel or an air damper.

Such climate control systems further comprise at least an actuator that can cause an operation of the wear part. In the examples, the actuator is a fan with a drive in an air duct that leads to the air filter, respectively the drive of the heat exchanger belt, respectively the damper drive.

In certain applications, such drives themselves can be considered to be wear parts, because they will need to be replaced more frequently than the intended overhaul of the system. For this case, their external power supply unit would be the actuator.

Additionally, the climate control system comprises at least a sensor and a controller.

The sensor is configured and installed for sensing an effect of the operation of the wear part and producing a sensed value. In the aforementioned examples, it may be a torque sensor that has been integrated in the respective drive. Advantageously, it is an airflow sensor in the air duct with the air filter, respectively an electric switch in a belt tensioner of the heat exchanger or a rotary speed sensor for the heat exchanger wheel.

The controller is configured for registering the sensed value and at least optionally on the basis at least thereof causing an operation of the actuator. It may be installed locally or remotely, even partially or wholly on a server in the cloud. In particular, the controller acts as a so-called watchdog for monitoring the wear status of the wear part. If appropriate, it can make the actuator operate the wear part differently, or end operation thereof altogether. For this, the controller occasionally performs a suitability test of the wear part on the basis of the sensed value.

Advantageously, the sensor and the controller might be part of a closed-loop-control of the operation of the wear part, together with the actuator. More to the point, the controller then registers a sensed value and, on the basis at least of the difference between the sensed value and a set value, causes an operation of the actuator with an intention to make the next sensed value approach the set value.

If the controller notices that the differential air pressure at a certain drive level surpasses a threshold value, it issues an alarm to a service provider that the air filter is no longer suitable and shuts down the climate control system. After the service provider has replaced the air filter and has reset the alarm via a human-machine-interface, the system can resume normal operation.

US5101639 describes a climate control system with an air filter, a belt-driven fan and an air pressure sensor that are installed in an air duct, and with a controller. In operation, "the controller can operate to determine whether or not there is a probability that the filter is dirty and needs replacement, or that the belt driven fan has a loose belt", thus performing a suitability test.

Highly capable, durable and energy efficient climate control systems contain many components that have been engineered and, on installation, adjusted to fit each other. In later use however, there is a systematic source of error that has been ignored in the art.

The invention allows recognition of the problem and offers a surprisingly practical solution.

The wear parts of a climate control system typically are not replaced by the manufacturer or by the installer, but by a maintenance provider or by a building caretaker. Occasionally, the recommendations about replacing them are not followed. This may lead to a loss of performance, efficiency or durability of the climate control system, which often remains undetected unless the installed climate control system happens to be analysed later in life. According to the invention, the controller is configured on occasion to perform an inherent suitability test of the wear part on the basis of a sensed value at different levels of operation of the actuator, preferably at levels of operation of which at least two levels differ by a factor 1.8 at least. This allows swift, reliable and easy testing whether the wear part is of the right sort when the wear part is known to have been replaced, or at intervals if this is not known or not known reliably.

Depending on the nature of the actuator and other equipment, the levels of operation may be chosen to be discrete or instead to span a range virtually continuously.

Preferably, the inherent suitability test includes comparing the sensed value from an expected value at the levels of operation of the actuator, more preferably by calculating an average of the deviation and comparing the result with a threshold value, for instance the arithmetic mean, preferably a weighted mean in accordance with available data on alternative wear parts in the market. Advantageously, the inherent suitability test includes comparing the increase of the deviation of the sensed value from the expected value divided by the increase of the level of operation of the actuator, more advantageously comparing an average of the deviation with an average of the increase of deviation. Advantageously, the inherent suitability test includes calculating the contribution of the polynomial approximation of at least the first and the second degree of the deviation of the sensed values from the expected values as a function of the level of operation of the actuator, more advantageously by concluding inherent unsuitability only if the first-degree contribution dominates the second-degree contribution.

The controller, again in a preferred version, is configured to perform an inherent suitability test as a result of registering a replacement of the wear part, possibly immediately after starting up the climate control system, possibly after it has run for some time but while the wear part is not expected to have worn substantially. The climate control system might comprise a specific sensor for sensing the replacement. In an advantageous alternative, it does not need to, because a human-machine-interface is configured to enable registration of a replacement of the wear part by the controller or because the controller is configured to register a replacement of the wear part by comparing the outcome of the most recent suitability test with the outcome of one or more previous suitability tests, preferably by noting that the outcome of the most recent suitability test deviates more than a threshold value from what would be expected from one or more previous ones.

In a preferred version of the invention, the climate control system comprises a human-machine interface, which might be construed locally, for instance as a set of lamps and switch-buttons or as a touch-screen panel, or done remotely, for instance as a laptop or as a mobile phone on which an application program communicates with the controller in or via the cloud. Preferably, the human-machine-interface is configured to display a result of a performed inherent suitability test. More preferably, the controller is configured to estimate some of the effects that are likely to occur, and the human-machine-interface is configured to display the estimation. Advantageously, it may be configured to reduce the operation of the actuator under certain circumstances, in order to preserve its longevity. More advantageously, the controller is configured to shut down operation of the actuator as a consequence of a performed inherent suitability test.

The wear part advantageously is an air filter. Similarly, the actuator is a fan with a drive and the level of operation is the speed thereof, and the sensor is an air flow sensor.
Figure 1 schematically depicts a climate control system according to the invention.
Figure 2 schematically depicts the controller of the climate control system of figure 1.
Figure 3 schematically depicts how the controller of figure 2 distinguishes an inherently unsuitable air filter from a suitable air filter in the climate control system of figure 1.
Figure 4 schematically depicts how a worn-out but inherently suitable air filter can be distinguished from a suitable air filter in the climate control system of figure 1.

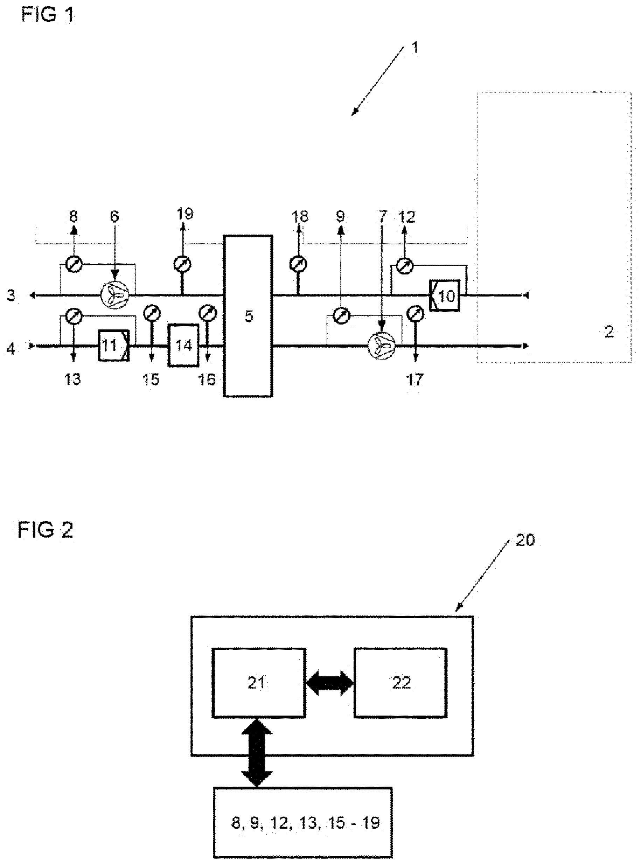

Figure 1 shows a climate control system 1 according to the invention in a building section 2. The climate control system 1 comprises an exhaust duct 3 and an intake duct 4.

A heat exchanger 5 transfers energy between the exhaust duct 3 and the intake duct 4. To that end the exhaust duct 3 and the inlet duct 4 each comprise a portion that is coupled to the heat exchanger.

A fan 6 conveys air through the exhaust duct 3, for which it includes a variable-speed drive. In an alternative that is not shown, an adjustable damper and a fan with a constant-speed drive might have been used. The rotational speed of the variable-speed drive of the fan 6 is set by a pulse-width modulated signal. A fan 7 of the same built conveys air through the intake duct 4.

A differential pressure sensor 8 senses the difference in air pressure over fan 6. For this, it is pressure-connected to exhaust duct 3 both upstream and downstream of fan 6. It comprises a diaphragm-beam type sensor element. A differential pressure sensor 9 of the same built is connected likewise to fan 7 inside intake duct 4.

Filters 10 and 11 are wear parts. They are arranged within the exhaust ducts 3, respectively 4. The filters 10 and 11 remove particles larger than or equal to 10 micrometres in size from the air. In a non-shown alternative, filter 10 removes particles larger than or equal to 2.5 micrometres in size. Both filters 10 and 11 also filter out a portion of any volatile organic compound in the air.

A differential pressure sensor 12 senses the difference in air pressure over filter 10. For this, it is pressure-connected to exhaust duct 3 both upstream and downstream of filter 10. It comprises a diaphragm-beam type sensor element. A differential pressure sensor 13 of the same built is connected likewise to filter 11 inside intake duct 4.

A further actuator in the sense of an electric preheater 14 has been arranged upstream of the heat exchanger 5 in the intake duct 4. A temperature switch 15 has been arranged upstream of preheater 14. It produces a signal in response to a temperature drop below a predetermined threshold. A temperature sensor 16 has been arranged downstream of preheater 14 for monitoring its output. In combination with the preheater 14, they enable a control loop that accurately keeps the temperature of air that enters the heat exchanger 5 above a predetermined threshold of 275 Kelvin, chosen by the skilled person so as to prevent icing in the heat exchanger 5.

In advantageous alternatives, the preheater also comprises a heat pump, or contains a gas-fired burner.

A temperature sensor 17 has been arranged near the outlet port of intake duct 4, for sensing the temperature of the air that enters the building part 2.

Also, temperature sensors 18 and 19 have been arranged in exhaust duct 3, upstream, respectively downstream of the heat exchanger 5. They allow determination of a temperature drop in the exhaust duct 3 across heat exchanger 5. Accordingly, measured values enabling control of the heating power and or of the cooling power of heat exchanger 5 become available.

Further sensors for optimising comfort have been arranged in intake duct 4 and in exhaust duct 3, but are not shown: moisture sensors, density sensors, sensors for volatile organic compounds and sensor for particular matter of 1 micrometre in size.

In figure 2, a controller 20 of a climate control system according to the invention is shown. It comprises a microprocessor 21 and a non-volatile memory 22.

The microprocessor 21 is coupled to receive the signals from the sensors 8, 9, 12, 13, 15 - 19 by means of a communication bus. Although not shown, it is also coupled to give signals to actuators 6, 7, 14. The controller 20 is configured in normal operation to register sensed values and to cause an operation of the actuators 6, 7, 14 as a function of the sensed values.

Also, controller 20 is a so-called watchdog by intermittently performing a suitability test of the filters 10, 11. If it concludes that the filters 10, 11 are clogged, via differential pressure sensors 12, 13, it lets the variable-speed drives of fans 6, 7 rotate slower, or not at all.

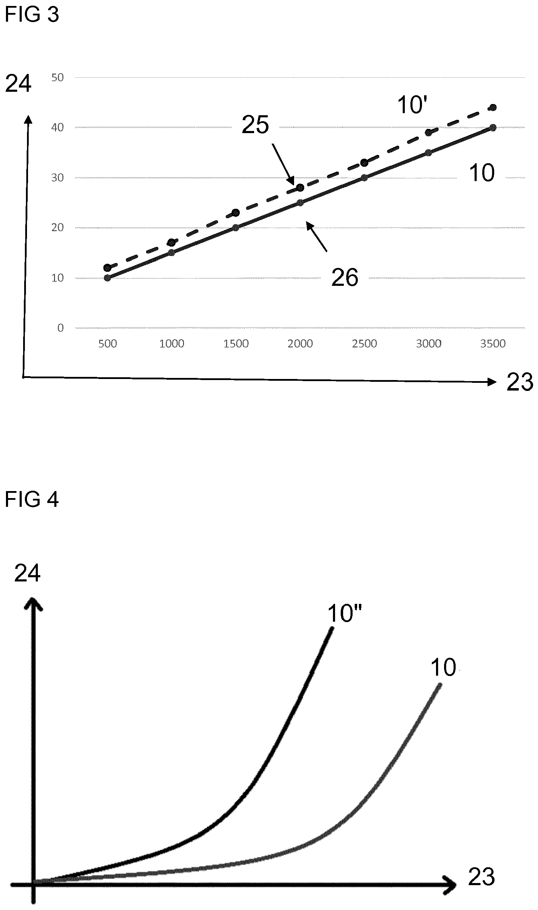

Figure 3 shows how the controller 20 carries out an inherent suitability test of a replaced filter 10' on the occasion of the integration thereof in the climate control system. To that end, figure 3 plots air flow 23 in m³/h in the exhaust duct 3 against the air pressure drop 24 in Pa over the filter 10'.

According to an alternative version of the invention, the controller 20 is configured periodically to perform the inherent suitability test of a wear part 10, 11. The controller 20 can, in particular, be configured to perform the inherent suitability test of the wear part 10, 11 for instance once per week or once every five months, depending on the kind of wear part.

The controller 20 causes the variable-speed drive of fan 6 stepwise to run at rotational speeds that correspond to air flow values 23 as calculated in closed loop control from the measured pressure difference over differential pressure sensor 8, here in six steps that begin at around 10% of the maximal durable drive speed.

In another version of the invention, the controller 20 causes the variable-speed drive of fan 6 to run at rotational speeds that near-continuously and slowly increase from a lower value up to a higher value, or vice versa.

Meanwhile, the controller 20 receives values 24 of the pressure difference over the air filter 10' that the differential pressure sensor 12 senses. It compares these sensed values 25 with expected values 26 for an inherently suitable filter 10, which have been stored in its non-volatile memory 22.

Next, the controller 20 calculates the arithmetic mean of the deviations, as well as the arithmetic mean of the increase of the deviation of the sensed value 25 from the expected value 26 divided by the increase of the level of operation of the actuator 6. It compares each result with a threshold value and concludes that the filter 10' is inherently unsuitable if the mean deviation exceeds its threshold value and does so significantly more than the mean increase of deviation.

In a more accurate alternative, the controller 20 approximates first order and second order polynomials of the deviation and compares their weight to make the conclusion.

In doing so, the controller 20 attempts to distinguish between the inherently unsuitable filter 10' of which the effect is shown in figure 3, and an inherently suitable but worn out filter.

The effect of such an inherently suitable but worn out filter 10" is shown in figure 4. Typically, accumulated dirt causes extra air resistance roughly proportional with the square of the air speed.

Next, the controller 20 makes a human-machine interface, which has not been shown, display a maintenance advice if the result surpasses a first reference value that has been stored in its non-volatile memory 22. In that case, the controller 20 also calculates what extra wear and how much extra energy consumption are to be expected on the basis of the difference in air flow resistance at certain operation levels and historical data about the rate of occurrence of these operation levels. If the result exceeds a second, higher reference value, which also has been stored in its non-volatile memory 22, the controller 20 shuts off the climate control system altogether.

In an alternative version according to the invention, the controller 20 merely limits the variable-speed drive of fan 6 to an emergency output and limits the other actuators 7, 14 accordingly.

The present disclosure also teaches a method for controlling an air treatment system having a at least one wear part 10, 11, at least one actuator 6, 7, 14, at least one sensor 12, and at least one controller 20, the method comprising the steps of: the at least one sensor 12 sensing an effect of an operation of the wear part 10, 11 at a first level of operation and producing a first sensed value 25; the at least one sensor 12 sensing an effect of an operation of the wear part 10, 11 at a second level of operation and producing a second sensed value; wherein the second level of operation is different from the first level of operation; the at least one controller 20 registering the first and the second sensed values; wherein the method also comprises the step of: the at least one controller 20 in operation occasionally performing an inherent suitability test of the wear part 10, 11 on the basis of comparing the first sensed value 25 with a first expected value 26 and on the basis of comparing the second sensed value with a second expected value.

It is envisaged that the air treatment system is comprised by a system for heating, ventilation and/or air-conditioning. It is also envisaged that the air treatment system is comprised by a climate system.

The at least one controller 20 preferably records the first and the second sensed values. The at least one controller 20 ideally is configured to record the first and the second sensed values.

The instant disclosure still further teaches a tangible machine-readable medium having a set of instructions stored thereon that when executed by one or more processors cause the one or more processors to perform the aforementioned methods.

The machine-readable medium preferably is non-transitory.

In an embodiment, the at least one controller 20 is in operative communication with the at least one sensor 12, 13. According to an aspect of the present disclosure, the at least one actuator couples to the at least one wear part 10, 11. According to an aspect of the present disclosure, the at least one actuator 6, 7 mechanically couples to the at least one wear part 10, 11.

Any steps of a method according to the present disclosure can be embodied in hardware, in a software module executed by a processor, in a software module being executed using operating-system-level virtualization, in a cloud computing arrangement, or in a combination thereof. The software can include a firmware, a hardware driver run in the operating system, or an application program. Thus, the disclosure also relates to a computer program product for performing the operations presented herein. If implemented in software, the functions described can be stored as one or more instructions on a computer-readable medium. Some examples of storage media that can be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes can be made therein without departing from the scope of the disclosure as defined by the following claims. It should also be understood that the disclosure is not restricted to the illustrated embodiments and that various modifications can be made within the scope of the following claims.

## Claims

1. Climate control system, comprising
at least one wear part (10, 11),
at least one actuator (6, 7) that is configured to cause an operation of the wear part (10, 11),
at least one sensor (12, 13) that is configured to sense an effect of the operation of the wear part (10, 11) and accordingly to produce a sensed value (25),
at least one controller (20) that is configured to register the sensed value (25) and at least optionally on the basis at least thereof to cause an operation of the actuator (6, 7),
wherein the controller (20) is configured on occasion to perform a suitability test of the wear part (10, 11) on the basis of a sensed value (25),
**characterised in that**
the controller (20) is configured on occasion to perform an inherent suitability test of the wear part (10, 11) on the basis of a sensed value (25) at different levels of operation of the actuator (6, 7).

2. Climate control system according to the preceding claim,
wherein the controller (20) is configured on occasion to perform an inherent suitability test of the wear part (10, 11) on the basis of a sensed value (25) at levels of operation of the actuator (6, 7) of which levels at least two differ by a factor 1.8 at least.

3. Climate control system according to any one of the preceding claims,
wherein the inherent suitability test includes comparing the sensed value (25) to an expected value (26) at the levels of operation of the actuator (6, 7).

4. Climate control system according to the preceding claim,
wherein the inherent suitability test includes calculating the contribution of the polynomial approximation of at least the first and the second degree of the deviation of the sensed value (25) from the expected value (26) as a function of the level of operation of the actuator (6, 7).

5. Climate control system according to any one of the preceding claims,
wherein the controller (20) is configured to perform an inherent suitability test as a result of registering a replacement of the wear part (10, 11).

6. Climate control system according to the preceding claim,
wherein the controller (20) is configured to register a replacement of the wear part (10, 11) by comparing the outcome of the most recent suitability test with the outcome of one or more previous suitability tests.

7. Climate control system according to any one of the preceding claims,
wherein the climate control system comprises a human-machine interface, and
wherein the human-machine-interface is configured to display a result of the performance of an inherent suitability test.

8. Climate control system according to the preceding claim,
wherein the controller (20) is configured to estimate some of the effects that are likely to occur, and
wherein the human-machine-interface is configured to display the estimation.

9. Climate control system according to any one of the preceding claims,
wherein the controller (20) is configured to lock out operation of the actuator (6, 7) as a consequence of the performance of an inherent suitability test.

10. Climate control system according to any one of the preceding claims,
wherein the wear part (10, 11) is an air filter.

11. Climate control system according to the preceding claim,
wherein the actuator (6, 7) is a fan with a drive.

12. Climate control system according to any one of both preceding claims,
wherein the sensor is an air flow sensor (8, 9, 12, 13).

13. Climate control system according to any one of the preceding claims,
wherein the controller (20) is configured to register a sensed value (25) and, at least optionally on the basis at least of the difference between the sensed value (25) and a set value, to cause an operation of the actuator (6, 7) with an intention to make the sensed value (25) approach the set value.

14. Method for controlling an air treatment system having a at least one wear part (10, 11), at least one actuator (6, 7), at least one sensor (12), and at least one controller (20), the method comprising the steps of:
the at least one sensor (12) sensing an effect of an operation of the wear part (10, 11) at a first level of operation and producing a first sensed value (25);
the at least one sensor (12) sensing an effect of an operation of the wear part (10, 11) at a second level of operation and producing a second sensed value;
wherein the second level of operation is different from the first level of operation;
the at least one controller (20) registering the first and the second sensed values;
wherein the method also comprises the step of:
the at least one controller (20) occasionally performing an inherent suitability test of the at least one wear part (10, 11) on the basis of comparing the first sensed value (25) with a first expected value (26) and on the basis of comparing the second sensed value with a second expected value.

15. A non-transitory, computer-readable medium containing a program which executes the steps of claim 14.
